# FASCICULE DE BREVET EUROPEEN

(11) **EP 1 190 902 B1**
(45) Date de publication et mention de la délivrance du brevet: **07.03.2007**
(21) Numéro de dépôt: 01490037.7
(22) Date de dépôt: 20.09.2001
(51) Int. Cl.: B60P 7/08

(54) **Dispositif d'enroulement à commande manuelle d'un élément enroulable**
Handbetriebene Vorrichtung zum Wickeln von Wickelgut
Manually operated device for winding a windable element

(30) Priorité: 26.09.2000 FR 0012187
(43) Date de publication de la demande: 27.03.2002
(73) Titulaire: Thiriet Fils (Société Anonyme), 08000 Warcq (FR)
(72) Inventeur: Thiriet, Philippe, 08420 Warcq (FR)
(74) Mandataire: Duthoit, Michel Georges André

(56) Documents cités:
- EP-A- 0 616 968
- DE-A- 2 914 888
- US-A- 2 946 563
- US-A- 4 860 606
- US-A- 5 800 105

## Description

La présente invention concerne un dispositif d'enroulement à commande manuelle d'un élément enroulable, tel que, par exemple, câble, filin, film, nappe, toile ou bâche, autour d'un arbre ou d'un tambour. Cette invention trouve son application dans de nombreux domaines où il est nécessaire pour des raisons quelconques de procéder à l'enroulement et/ou au déroulement d'un élément.

Par exemple, dans le domaine du transport, il est connu des caisses de camion ou remorque, utilisées pour le transport de marchandises, équipées de bâches, pour protéger ces dernières. Pour faciliter le chargement et/ou le déchargement des marchandises, il est courant de rendre les bâches amovibles afin de pouvoir les ôter ou les replacer rapidement.

Ces bâches sont, par exemple, suspendues par des chariots dans un rail, comme des rideaux. La bâche est ensuite tendue, lorsqu'elle est déployée, en divers points de la caisse.

Une autre possibilité consiste à prévoir l'enroulement des bâches latérales autour d'un arbre disposé verticalement, qui est alors nécessaire de mettre en rotation, dans un sens ou dans l'autre, pour soit enrouler, soit dérouler la bâche.

C'est ainsi qu'il est connu un dispositif du type précité, comprenant une chape, dans laquelle sont disposés d'une part un levier de manoeuvre oscillant, dont la tête est montée libre en rotation sur un axe d'entraînement, ce dernier tourillonnant dans les deux flasques de la chape, et d'autre part un pignon denté, solidaire dudit axe d'entraînement, et assujetti audit arbre ou tambour d'enroulement, ledit levier de manoeuvre agissant sur ledit pignon par l'intermédiaire :
- d'un premier cliquet, solidaire du levier de manoeuvre et coopérant avec le pignon denté, pour l'entraîner en rotation selon un sens d'oscillation de la poignée, et non dans l'autre sens correspondant à son retour par débrayage vers son point de départ,
- d'un second cliquet, coopérant également avec le pignon denté, indépendamment du levier de manoeuvre, et permettant le libre entraînement en rotation du pignon denté par entraînement dans un sens d'oscillation de la poignée, et sa retenue dans l'autre sens correspondant à son retour par débrayage.

Dans ce dispositif connu, le pignon denté ainsi que le premier cliquet sont traditionnellement logés entre les deux branches d'une chape en U, prévue à l'extrémité du levier de manoeuvre.

Autrement dit, le dispositif nécessite une double chape, la première, dite principale, renfermant l'ensemble des éléments et, la seconde dite de manoeuvre, renfermant au moins le pignon et ledit premier cliquet.

Il s'ensuit un empilement constitué de trois éléments, à savoir les branches de la chape d'extrémité du levier, le pignon denté associé au premier cliquet et, auquel il faut bien entendu ajouter les deux flasques de la chape principale du dispositif proprement dit.

Un tel empilement d'éléments conduit à un encombrement important, dont il faudra tenir compte lors, par exemple, de la conception d'un véhicule, dont la largeur est réglementée, et qui vient au détriment bien entendu du volume utile de chargement du véhicule.

Le document DE 29 14 888 divulgue un dispositif selon le préambule de la revendication 1.

Le but de la présente invention est de proposer un dispositif d'enroulement à commande manuelle, compact et résistant, permettant l'enroulement d'un élément enroulable, tel que, par exemple, câble, filin, film, nappe, toile ou bâche, autour d'un arbre ou tambour qui permette une telle mise en oeuvre.

L'un des buts de la présente invention est de proposer un dispositif d'enroulement à commande manuelle qui soit commode d'utilisation pour l'opérateur et qui présente une grande robustesse aux chocs ainsi qu'une bonne fiabilité et puissance.

Un autre but de l'invention est de proposer un dispositif d'enroulement d'encombrement réduit, n'ayant pas de conséquence néfaste sur les dimensions du véhicule par exemple, et conséquemment sur le volume utile de sa caisse ou de sa remorque.

Un autre but de la présente invention est de proposer un dispositif d'enroulement qui soit réversible afin de permettre le libre choix de sa mise en place, à droite ou à gauche.

Bien que plus spécialement développée pour les applications précitées, la présente invention n'est toutefois nullement limitée à celles-ci et peut d'une façon générale, permettre l'enroulement d'un élément souple ou semi-rigide autour d'un arbre ou tambour.

La présente invention a pour but de remédier aux inconvénients précités et d'atteindre ses buts et concerne à cet effet, un dispositif d'enroulement à commande manuelle d'un élément enroulable, tel que, par exemple, câble, filin, film, nappe, toile ou bâche, autour d'un arbre ou tambour d'enroulement, ledit dispositif comprenant une chape, dans laquelle sont disposés, d'une part un levier de manoeuvre oscillant, dont la tête est montée libre en rotation sur un axe d'entraînement, ce dernier tourillonnant dans les deux flasques de la chape, et d'autre part un pignon denté, solidaire dudit axe d'entraînement, et assujetti à l'arbre ou tambour d'enroulement, ledit levier de manoeuvre agissant sur ledit pignon par l'intermédiaire :
- d'un premier cliquet, solidaire du levier de manoeuvre et coopérant avec le pignon denté, pour l'entraîner en rotation selon un sens d'oscillation du levier, et non dans l'autre sens correspondant à son retour par débrayage vers son point de départ,
- d'un second cliquet, coopérant également avec le pignon denté indépendamment du levier de manoeuvre, et permettant le libre entraînement en rotation du pignon denté par engrènement dans un sens d'oscillation du levier et sa retenue dans l'autre sens correspondant à son retour par débrayage,
la tête du levier de manoeuvre étant constituée par une partie d'extrémité plane unique, s'interposant entre le premier flasque de la chape et le pignon denté, ce dernier étant en contact avec le deuxième flasque de la dite chape pour l'obtention d'un empilement axial réduit à deux éléments et engendrant une largeur de l'ensemble du dispositif réduite, pour une même résistance mécanique.

La présente invention concerne également les caractéristiques qui ressortiront au cours de là description qui va suivre et qui devront être considérées isolément ou selon toutes leurs combinaisons techniques possibles.

Cette description donnée à titre d'exemple, non limitative, fera mieux comprendre comment l'invention peut être réalisée, en référence aux dessins annexés sur lesquels :
- la figure 1 est une vue de côté du dispositif d'enroulement selon l'invention montrant ses organes constitutifs,
- la figure 2 est une vue de dessus du dispositif selon la figure 1,
- la figure 3 est une vue de dessus selon la figure 2 avec arraché d'un flasque de la chape pour montrer les organes constitutifs en vue de dessus,
- la figure 4 est une vue de détail de la figure 1 à échelle agrandie,
- la figure 5 est une vue en perspective d'une variante de réalisation du dispositif d'enroulement selon l'invention.

Le dispositif d'enroulement 1 globalement désigné sur les figures est destiné à commander manuellement un élément enroulable autour d'un arbre ou tambour d'enroulement 2.

Ce dispositif d'entraînement 1 comprend une chape 3 dans laquelle est disposé un levier de manoeuvre oscillant 4, dont la tête 5 est montée en libre rotation sur un axe d'entraînement 6, ce dernier tourillonnant dans les flasques 3a, 3b de la chape 3. En outre, dans ladite chape 3, est disposé un pignon denté 7, solidaire dudit axe d'entraînement 6, et assujetti à l'arbre ou tambour d'enroulement 2. Le levier de manoeuvre oscillant 4 agit sur ledit pignon 7 par l'intermédiaire :
- d'un premier cliquet 8, solidaire du levier de manoeuvre 4 et coopérant avec le pignon denté 7, notamment en engrènement, pour l'entraîner en rotation selon un sens d'oscillation du levier 4, et non dans l'autre sens correspondant à son retour par débrayage vers son point de départ,
- d'un second cliquet 17, coopérant également avec le pignon 7, indépendamment du levier de manoeuvre 4 et permettant le libre entraînement en rotation du pignon denté 7, notamment par engrènement, dans un sens d'oscillation du levier 4 et sa retenue dans l'autre sens correspondant à son retour par débrayage.

Avantageusement, la tête 5 du levier de manoeuvre 4 est constituée par une parte d'extrémité plane unique, s'interposant entre un premier flasque 3a de la chape 3 et le pignon denté 7. Ce dernier est en contact, directement notamment, avec le second flasque 3b de ladite chape 3 pour l'obtention d'un empilement axial réduit à deux éléments 7 et 5. Cela engendre conséquemment une largeur de l'ensemble du dispositif également réduite.

A titre d'exemple, dans le cas d'enroulement d'une bâche de camion, on peut réaliser un dispositif d'une hauteur H de l'ordre de 40 mm, d'une longueur L de l'ordre de 250 mm et d'une profondeur P de l'ordre de 45 à 50 mm, ce qui permet d'encastrer le dispositif au niveau du longeron du camion.

En ce qui concerne le premier cliquet 8, celui-ci est monté pivotant sur ladite partie d'extrémité plane constituant la tête 5 du levier de manoeuvre 4, entre celle-ci 5 et le deuxième flasque 3b de la chape 3, et ceci dans le même plan que le pignon denté 7.

Le premier cliquet 8 est monté sur la tête 5 du levier 4 par l'intermédiaire d'un axe d'articulation 9 solidaire de ladite extrémité plane 5 du levier 4. En outre, il est excentré par rapport à l'axe 6 solidaire du pignon denté 7 pour l'obtention d'un second empilement axial, également réduit, à deux éléments 8 et 5, de cote sensiblement égale, audit premier empilement constitué par les éléments 7 et 5.

Ledit premier cliquet 8 est, par ailleurs, rappelé élastiquement par l'intermédiaire d'un ressort 10 interposé entre son levier de débrayage 11 et le levier de manoeuvre 4.

En ce qui concerne le second cliquet 17, celui-ci est monté pivotant sur un axe 12, disposé également entre les deux flasques 3a, 3b de la chape 3, et sa cote correspond notamment à l'empilement du pignon denté 7 et de la tête 5 du levier de manoeuvre 4, ou encore notamment à celle du premier cliquet 8 et de la tête 5 de manoeuvre 4.

Le second cliquet 17 est maintenu en appui élastique sur le pignon 7 par l'intermédiaire d'un ressort 13, monté en compression entre un capot de fermeture 3c de la chape 3 et ledit second cliquet 17.

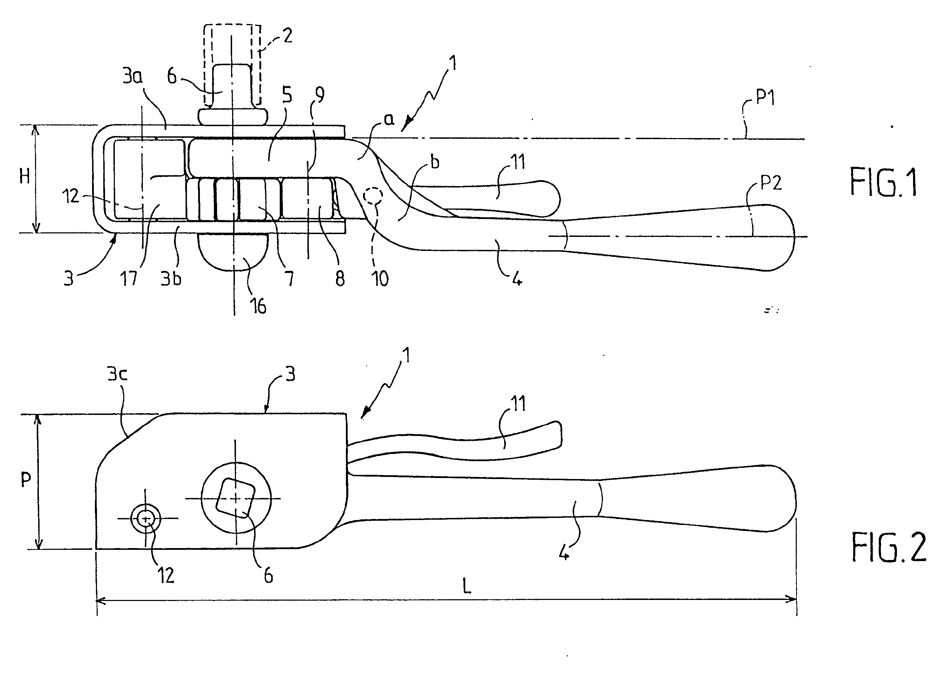

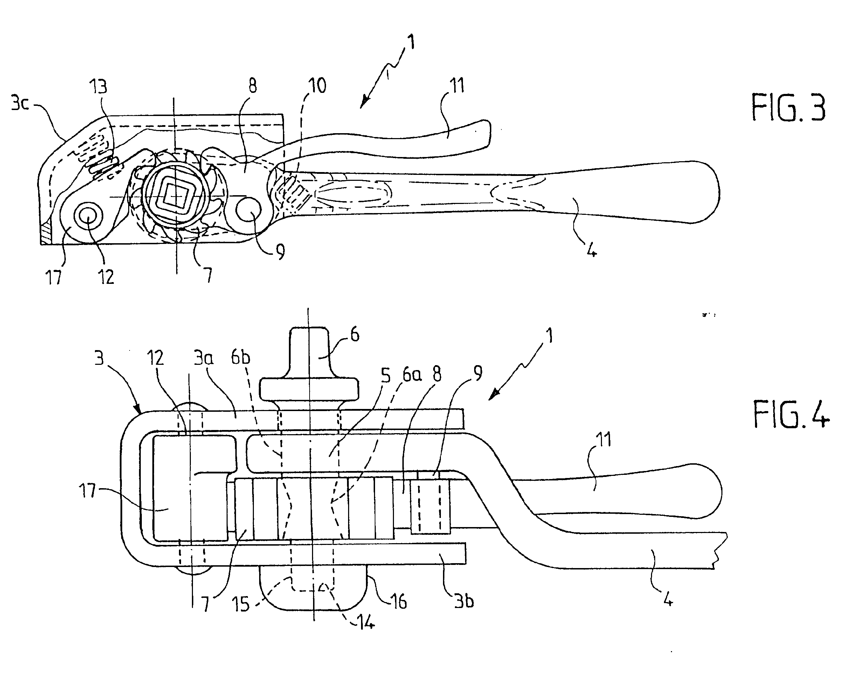

Comme le montent les figures 1 et 4, le levier de manoeuvre 4 est désaxé par rapport à sa tête 5 par un coudage " a " vers l'intérieur de la chape 3 et un contre-coudage " b ", pour former avec ladite tête 5 deux plans P1, P2 sensiblement parallèles dont l'écartement correspond notamment à la largeur interne de là chape 3.

Le ressort de rappel 10 du premier cliquet 8 est précisément interposé entre cette partie coudée du levier 4 et le levier de débrayage 11 dudit premier cliquet 8.

Le premier cliquet 8 est en fait débrayable, par l'intermédiaire de son levier de débrayage 11. Ce dernier s'étend vers l'extérieur de la chape 3, à partir de son articulation 9, et cela dans une direction sensiblement à celle du cliquet proprement dit 8 et dans un plan sensiblement parallèle au levier de manoeuvre coudé 4, comme le montrent particulièrement les figures 2 et 3.

Par ailleurs, les longueurs du levier de débrayage 11 et du levier de manoeuvre 4 sont respectivement plus courte et plus longue, de manière à ce que le levier de manoeuvre 4 puisse être saisi à pleine main par un opérateur, tout en lui laissant la possibilité d'agir sur celui de débrayage 11, notamment avec le pouce de la même main, pour constituer une prise de préhension ergonomique de l'ensemble du dispositif.

Selon une autre caractéristique de l'invention, l'axe d'entraînement 6, sur lequel sont montés solidairement le pignon denté 7 et librement la tête 5 du levier de manoeuvre 4, présente des sections 6a 6b, situées respectivement au droit du pignon 7 et ladite tête 5, qui sont respectivement polygonales, notamment quadrangulaire, et circulaire, et qui correspondent à des sections semblables des alésages de ces derniers éléments 7 et 5.

Plus précisément, la partie de section polygonale 6a de l'axe d'entraînement 6 correspondant au pignon denté 7, est de forme tronc pyramidal, de manière à autoriser un emmanchement à force dudit pignon denté 7 sur l'axe.

Selon une autre caractéristique de l'invention l'axe d'entraînement 6 traverse librement les flasques 3a, 3b de la chape 3 et est immobilisé en translation par serrage dans le logement correspondant du pignon denté 7, selon une force contrôlée, et en fonction de la profondeur d'emmanchement. Ladite profondeur est déterminée par une butée 14 constituée par le fond d'un alésage interne 15 d'une coupelle 16, assujettie extérieurement, notamment par soudure, au flasque 3b de la chape 3. Cette butée est située du côté du pignon denté 7 notamment, en regard du trou de passage dans celle-ci.

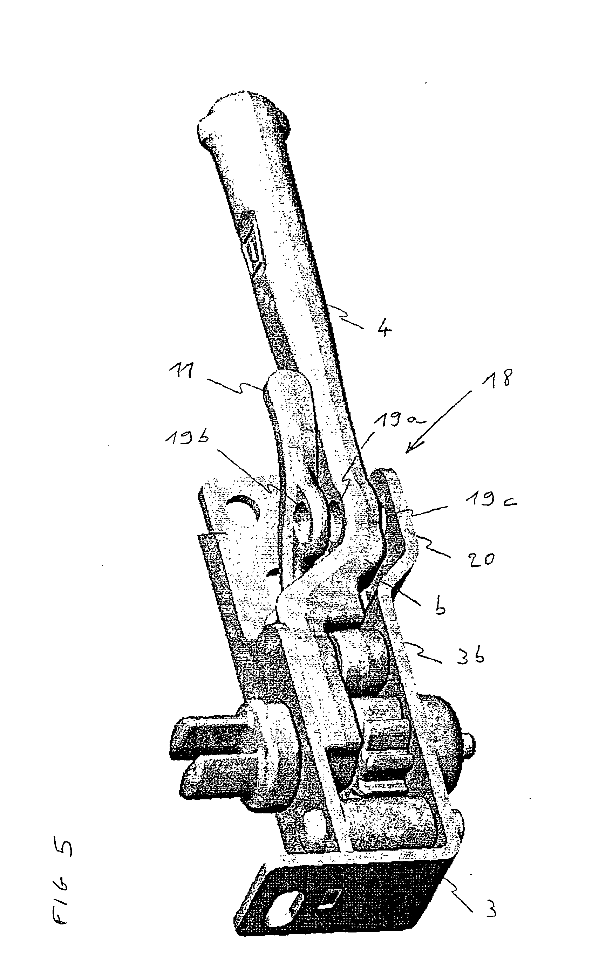

Selon une autre caractéristique de l'invention, et en se reportant à la figure 5, on prévoit l'intégration d'un dispositif de blocage 18 au dispositif d'enroulement de manière à empêcher notamment un enroulement ou un déroulement non autorisé de l'élément enroulable. Le dispositif de blocage 18 consiste à bloquer le levier de manoeuvre oscillant 4 par rapport au levier de débrayage 11 et à la flasque 3b de la chape 3.

A cet effet, ledit dispositif de blocage 18 comprend au moins trois perçages 19a, 19b, 19c, ménagés respectivement au niveau du levier de manoeuvre oscillant 4, du levier de débrayage 11 et de la flasque 3b de la chape. Lesdits perçages 19a, 19b, 19c, sont disposés de manière à être sensiblement alignés entre eux lorsque les éléments 4, 11 et 3b sont dans une position donnée, correspondant de préférence à une position du levier de manoeuvre oscillant 4 entre les deux flasques 3a et 3b, de manière à pouvoir introduire à travers ces perçages 19a, 19b, 19c, un élément de verrouillage, non représenté dans les dessins annexés. Ledit élément de verrouillage est constitué d'une tige de verrou ou d'un câble notamment du type de ceux utilisés dans les transports routiers internationaux. La coopération entre lesdits perçages 19a, 19b, 19c, et l'élément de verrouillage empêche toute manoeuvre du levier de manoeuvre oscillant 4 par rapport au levier de débrayage 11 et à la flasque 3b.

A titre d'exemple, le perçage 19a du levier de manoeuvre oscillant 4 est réalisé entre la poignée dudit levier et le contre-coudage " b ". Dans cet exemple, on réalise un allongement 20 de la flasque 3a de la chape 3, allongement qui épouse la forme du contre-coudage " b " et qui s'étend parallèlement au levier de manoeuvre 4 de manière à ménager un perçage 19c dans ledit allongement 20 en vis à vis du perçage 19a réalisé dans ledit levier de manoeuvre 4. Le perçage 19b du levier de débrayage 11 est réalisé de sorte que les trois perçages soient alignés lorsque le levier de manoeuvre 4 est dans ladite position donnée.

A ce niveau, il est important de noter que par perçage, on entend également un anneau, boucle ou similaire assujetti aux leviers 4 ou 11 ou à la flasque 3a permettant l'introduction de l'élément de verrouillage.

Un avantage supplémentaire apporté par l'invention, réside dans le fait qu'un tel agencement selon la description qui précède autorise une réversibilité de tous les éléments permettant ainsi une adaptation du dispositif d'enroulement, à droite ou à gauche, en fonction du cas de figure rencontré, cet avantage s'ajoutant bien entendu au fait du très faible encombrement de ce dispositif dû à sa compacité.

## Revendications

1. Dispositif d'enroulement (1) à commande manuelle d'un élément enroulable, tel que, par exemple câble, filin, film, nappe, toile ou bâche, autour d'un arbre ou tambour d'enroulement (2), ledit dispositif comprenant une chape (3), dans laquelle sont disposés d'une part un levier de manoeuvre oscillant (4), dont la tête (5) est constituée par une partie d'extrémité plane unique et est montée libre en rotation sur un axe d'entraînement (6), ce dernier tourillonnant dans les deux flasques (3a, 3b) de la chape (3), et d'autre part un pignon denté (7), étant en contact avec le deuxième flasque (3b) de ladite chape (3) solidaire dudit axe d'entraînement (6), et assujetti à l'arbre ou tambour d'enroulement (2), ledit levier de manoeuvre (4) agissant sur ledit pignon (7) par l'intermédiaire :
- d'un premier cliquet (8), solidaire du levier de manoeuvre (4) et coopérant avec le pignon denté (7), pour l'entraîner en rotation selon un sen d'oscillation du levier (4), et non dans l'autre sens correspondant à son retour par débrayage vers son point de départ,
- d'un second cliquet (17) coopérant également avec le pignon denté (7), indépendamment du levier de manoeuvre (4), et permettant le libre entraînement en rotation du pignon denté (7) par engrènement dans un sens d'oscillation du levier (4), et sa retenue dans l'autre sens correspondant à son retour par débrayage,
**caractérisé en ce que** la tête (5) du levier de manoeuvre (4) s'interpose entre le premier flasque (3a) de la chape (3) et le pignon denté (7) pour l'obtention d'un empilement axial réduit aux deux éléments, pignon denté (7) et tête (5).

2. Dispositif, selon la revendication 1, dans lequel ledit premier cliquet (8) est monté pivotant sur ladite tête (5) du levier de manoeuvre (4), entre celle-ci (5) et le deuxième flasque (3b) de la chape (3), dans le même plan que le pignon denté (7), et cela par l'intermédiaire d'un axe d'articulation (9), solidaire de ladite extrémité plane (5) du levier (4) et excentré par rapport à l'axe d'entraînement (6), pour l'obtention d'un second empilement axial, également réduit aux deux éléments premier cliquet (8) et tête (5).

3. Dispositif, selon la revendication 1, dans lequel le second cliquet (17) est monté pivotant sur un axe (12), disposé entre les deux flasques (3a, 3b) de la chape (3), la cote du second cliquet correspondant audit premier empilement du pignon denté (7) et de la tête (5) du levier de manoeuvre (4).

4. Dispositif, selon la revendication 1, dans lequel le levier de manoeuvre (4) est désaxé par rapport à sa tête (5) par un coudage " a " et un contre-coudage " b ", pour former deux plans " P1, P2 " sensiblement parallèles dont l'écartement est sensiblement égal à la largeur interne de la chape (3).

5. Dispositif, selon l'une des revendications 1 à 4, dans lequel le premier cliquet (8) est débrayable par l'intermédiaire d'un levier de débrayage (11) s'étendant à partir de son articulation (9) vers l'extérieur de la chape (3), dans une direction sensiblement opposée à celle dudit premier cliquet (8) et dans un plan sensiblement parallèle au levier de manoeuvre (4).

6. Dispositif, selon la revendication 5, dans lequel le premier cliquet (8) est rappelé élastiquement par l'intermédiaire d'un ressort (10) interposé entre son levier de débrayage (11) et le levier de manoeuvre (4).

7. Dispositif, selon la revendication 5 ou 6, dans lequel les longueurs du levier de débrayage (11) et du levier de manoeuvre (4) sont respectivement plus courte et plus longue, de manière à ce que le levier de manoeuvre (4) puisse être saisi à pleine main par un opérateur, tout en lui laissant la possibilité d'agir sur celui de débrayage (11) avec la même main, pour constituer une prise de préhension ergonomique dudit dispositif.

8. Dispositif, selon l'une des revendications 5 à 7 dans lequel est intégré un dispositif de blocage (18) comprenant au moins trois perçages (19a, 19b, 19c) ménagés respectivement au niveau du levier de manoeuvre oscillant (4), du levier de débrayage (11) et de la flasque (3b) de la chape (3) et coopérant avec un élément de verrouillage de manière à empêcher toute manoeuvre du levier de manoeuvre oscillant (4) par rapport au levier de débrayage (11) et à la flasque (3b).

9. Dispositif, selon l'une des revendications 1 à 8, dans lequel l'axe d'entraînement (6), sur lequel sont montés solidairement le pignon denté (7) et librement la tête (5) du levier de manoeuvre (4), présente des sections (6a, 6b), situées respectivement au droit du pignon (7) et de la tête (5) du levier de manoeuvre, qui sont, respectivement polygonale et circulaire et qui correspondent à des sections semblables des alésages de ces derniers.

10. Dispositif, selon la revendication 9, dans lequel la partie de section polygonale (6a) de l'axe d'entraînement (6) correspondant au pignon denté (7) est de forme tronc pyramidal, de manière à autoriser un emmanchement à force dudit pignon denté (7).

11. Dispositif, selon la revendication 9 ou 10, dans lequel l'axe d'entraînement (6) traverse librement les flasques (3a, 3b) de la chape (3) et est immobilisé en translation par serrage dans le logement correspondant du pignon denté (7), selon une force contrôlée, et en fonction de la profondeur d'emmanchement, cette dernière étant déterminée par une butée (14), constituée par le fond d'un alésage interne (15) d'une coupelle (16) assujettie extérieurement au flasque (3b) de la chape (3) et qui est située du côté du pignon denté (7).

## Claims

1. A manual control winding device (1) for a windable element, such as for example a cable, a wire, a film, a course, a web or a tarpaulin, around a winding shaft or drum (2), said device including a block (3) accommodating on the one hand an operating swing lever (4) whereof the head (5) is composed of a single flat end portion and is mounted free to rotate on a driving axle (6), the latter swivelling inside two flanges (3a, 3b) of the block (3), and on the other hand a toothed pinion (7), in contact with the second flange (3b) of said block (3), interconnected with said driving axle (6), and slaved to the driving shaft or drum (2), said operating lever (4) acting on said pinion (7) by means of
- a first ratchet (8), interconnected with the operating lever (4) and co-operating with the toothed pinion (7), in order to drive it into rotation along a swing direction of the lever (4), and not into the other direction, corresponding the disengaging recall thereof towards its starting point,
- a second ratchet (17), also co-operating with the toothed pinion (7), independently of the operating lever (4), and enabling free driving into rotation of the toothed pinion (7) by meshing into a swing direction of the lever (4), and its holding thereof into the other direction corresponding to its disengaging recall,
**characterised in that** the head (5) of the operating lever (4) is interposed between the first flange (3a) of the block (3) and the toothed pinion (7) for obtaining an axial pile reduced to two elements, i.e. the toothed pinion (7) and the head (5).

2. A device according to claim 1, wherein said first ratchet (8) is mounted to swing on said head (5) of the operating lever (4), between said head (5) and the second flange (3b) of the block (3), in the same plane as the toothed pinion (7), by dint of a hinge axle (9), interconnected with said flat end (5) of the lever (4) and eccentric with respect to the driving axle (6), for obtaining a second axial pile, also reduced to two elements, i.e. the first ratchet (8) and the head (5).

3. A device according to claim 1, wherein the second ratchet (17) is mounted to rotate on an axle (12), provided between both flanges (3a, 3b) of the block (3), the dimension of the second ratchet corresponding to the first pile of the toothed pinion (7) and of the head (5) of the operating lever (4).

4. A device according to claim 1, wherein the operating lever (4) is offset relative to its head (5) by an elbow 'a' and a counter-elbow 'b', in order to form two planes 'P1, P2' substantially parallel whereof the spacing is substantially equal to the inside width of the block (3).

5. A device according to one of the claims 1 to 4, wherein the first ratchet (8) can be disengaged by dint of a disengagement lever (11) extending from the hinge (9) thereof to the outside of the block (3), along a direction substantially opposite to that of said first ratchet (8) and in a plane substantially parallel to the operating lever (4).

6. A device according to claim 5, wherein the first ratchet (8) is recalled elastically by dint of a spring (10), interposed between its disengagement lever (11) and the operating lever (4).

7. A device according to claim 5 or 6, wherein the lengths of the disengagement lever (11) and of the operating lever (4) are respectively shorter and longer, so that the operating lever (4) may be gripped fully by an operator, while leaving the possibility of acting on the disengagement lever (11) with the same hand, in order to provide an ergonomic grip of said device.

8. A device according to any of the claims 5 to 7, integrating a locking device (18) comprising at least three bores (19a, 19b, 19c) provided respectively at the swing operating lever (4), the disengagement lever (11) and the flange (3b) of the block (3) and co-operating with a locking element so as to prevent any operation of the swing operating lever (4) with respect to the disengagement lever (11) and to the flange (3b).

9. A device according to any of the claims 1 to 8, wherein the driving axle (6) accommodating the toothed pinion (7) fixedly and the head (5) freely, exhibits sections (6a, 6b), situated respectively orthogonally to the pinion (7) and to the head (5) of the operating lever, which are respectively polygonal and circular and which correspond to similar sections of the bores thereof.

10. A device according to claim 9, wherein the portion of the polygonal section (6a) of the driving axle (6) corresponding to the toothed pinion (7) is truncated as a pyramid, so as to enable force-fitting of said toothed pinion (7).

11. A device according to claim 9 or 10, wherein the driving axle (6) runs freely through the flanges (3a, 3b) of the block (3) and is locked in translation by clamping inside the corresponding housing of the toothed pinion (7), with controlled force, and relative to the shrunk-fitting depth, the latter being determined by the bottom of an internal bore (15) of a cup (16) slaved externally to the flange (3b) of the block (3) and which is situated on the side of the toothed pinion (7).

## Patentansprüche

1. Handbetätigte Vorrichtung zum Aufwickeln (1) eines aufwickelbaren Elements, wie zum Beispiel eines Kabels, eines Seils, einer Folie, einer Materialbahn, eines Gewebes oder einer Plane um eine Wickelwelle oder -trommel (2), wobei die besagte Vorrichtung eine Lauffläche (3) umfaßt, in der, einerseits, ein schwingender Bedienungshebel (4), dessen Kopf (5) durch einen einzelartigen flachen Endteil gebildet ist und der frei drehbar auf einer Antriebsachse (6) montiert ist, wobei sich diese Letztere in den beiden seitlichen Flächen (3a, 3b) der Lauffläche (3) dübelt, und, andererseits, ein Zahntrieb (7), der in Berührung mit der zweiten seitlichen Fläche (3b) der besagten Lauffläche (3) und fest verbunden mit der besagten Antriebsachse (6) und an der Wickelwelle oder -trommel (2) befestigt ist, angeordnet sind, wobei der besagte Bedienungshebel (4) auf den besagten Zahntrieb (7) wirkt über :
- eine erste Schaltklinke (8), die mit dem Bedienungshebel (4) fest verbunden ist und mit dem Zahntrieb (7) zusammenwirkt, um diesen in Drehung nach der Schwingrichtung des Hebels (4), und nicht nach der anderen Richtung, die seinem Rücksprung durch Auskupplung in Richtung auf seinen Ausgangspunkt entspricht, anzutreiben ;
- eine zweite Schaltklinke (17), die unabhängig von dem Bedienungshebel (4) ebenfalls mit dem Zahntrieb (7) zusammenwirkt, und den freien Antrieb in Drehung des Zahntriebes (7) durch Eingriff in einer Schwingrichtung des Hebels (4) und seinen Rückhalt in der anderen Richtung, die seinem Rücksprung durch Auskupplung entspricht, erlaubt,
**dadurch gekennzeichnet, daß** der Kopf (5) des Bedienungshebels (4) sich zwischen der ersten seitlichen Fläche (3a) der Lauffläche (3) und dem Zahntrieb (7) einfügt, um eine axiale Aufstockung zu erzielen, die auf die beiden Elemente, den Zahntrieb (7) und den Kopf (5), reduziert ist.

2. Vorrichtung nach Anspruch 1, bei der die besagte erste Schaltklinke (8) schwenkbar am besagten Kopf (5) des Bedienungshebels (4), zwischen diesem (5) und der zweiten seitlichen Fläche (3b) der Lauffläche (3), in derselben Ebene wie der Zahntrieb (7), und zwar mittels eines Gelenkzapfens (9), fest verbunden mit dem besagten flachen Ende (5) des Hebels (4) und außermittig hinsichtlich der Antriebsachse (6), montiert ist, um eine zweite axiale Aufstockung zu erzielen, die ebenfalls auf die beiden Elemente, den Zahntrieb (7) und den Kopf (5), reduziert ist.

3. Vorrichtung nach Anspruch 1, bei der die zweite Schaltklinke (17) auf eine Achse (12) schwenkbar montiert ist, die zwischen den beiden seitlichen Flächen (3a, 3b) der Lauffläche (3) angeordnet ist, wobei die Seite der zweiten Schaltklinke der besagten ersten Aufstockung aus dem Zahntrieb (7) und dem Kopf (5) des Bedienungshebels (4) entspricht.

4. Vorrichtung nach Anspruch 1, bei der der Bedienungshebel (4) hinsichtlich seines Kopfes (5) durch einen Bogen "a" und einen Gegenbogen "b" versetzt ist, um zwei im wesentlichen parallele Ebenen "P1, P2" zu bilden, deren Beabstandung im wesentlichen der inneren Breite der Lauffläche (3) entspricht.

5. Vorrichtung nach einem der Ansprüche 1 bis 4, bei der die erste Schaltklinke (8) mittels eines Auskupplungshebels (11) auskuppelbar ist, der sich ab ihrer gelenkigen Verbindung (9) nach der Außenseite der Lauffläche (3) in einer zu jener der besagten ersten Schaltklinke (8) im wesentlichen entgegengesetzten Richtung, und in einer zum Bedienungshebel (4) im wesentlichen parallelen Ebene erstreckt.

6. Vorrichtung nach Anspruch 5, bei der die erste Schaltklinke (8) elastisch über eine Feder (10) zurückgestellt wird, die zwischen ihrem Auskupplungshebel (11) und dem Bedienungshebel (4) eingesetzt ist.

7. Vorrichtung nach Anspruch 5 oder 6, bei der die Längen des Auskupplungshebels (11) und des Bedienungshebels (4) entsprechend länger bzw. kürzer sind, derart, daß der Bedienungshebel (4) von einem Bediener mit voller Hand gefaßt werden kann, während ihm die Möglichkeit gelassen wird, auf jenen zur Auskupplung (11) mit derselben Hand zu wirken, um einen ergonomischen Zapfgriff der besagten Vorrichtung zu schaffen.

8. Vorrichtung nach einem der Ansprüche 5 bis 7, bei die eine Sperrvorrichtung (18) integriert ist, die wenigstens drei Bohrungen (19a, 19b, 19c) umfasst, die entsprechend im Bereich des schwingenden Bedienungshebels (4) des Auskupplungshebels (11) bzw. der seitlichen Fläche (3b) der Lauffläche (3) vorgesehen ist, und mit einem Verriegelungselement zusammenwirkt, derart, um jegliche Betätigung des schwingenden Bedienungshebels (4) hinsichtlich des Auskupplungshebels (11) und der seitlichen Fläche (3b) zu verhindern.

9. Vorrichtung nach einem der Ansprüche 1 bis 8, bei der die Antriebsachse (6), auf der der Zahntrieb (7) fest verbunden, und der Kopf (5) des Bedienungshebels (4) frei montiert ist, Abschnitte (6a, 6b) aufweist, die entsprechend gegenüber dem Zahntrieb (7) bzw. dem Kopf (5) des Bedienungshebels befindlich sind, welche entsprechend polygonal bzw. kreisförmig sind, und welche ähnlichen Abschnitten der Ausbohrungen dieser Letzteren entsprechen.

10. Vorrichtung nach Anspruch 9, bei der der Teil mit polygonalem Querschnitt (6a) der Antriebsachse (6), der dem Zahntrieb (7) entspricht, die Form eines Pyramidalstumpfs hat, derart, um eine Preßpassung des besagten Zahntriebes (7) zu erlauben.

11. Vorrichtung nach Anspruch 9 oder 10, bei der die Antriebsachse (6) die seitlichen Flächen (3a, 3b) der Lauffläche (3) frei durchsetzt und in Translation durch Spannen in der entsprechenden Ausnehmung des Zahntriebes (7) mit kontrollierter Kraft und in Abhängigkeit von der Passungstiefe unbeweglich gemacht ist, wobei diese letztere durch einen Anschlag (14) bestimmt sei, der durch den Boden einer inneren Aufnahmebohrung (15) einer Schale (16) gebildet ist, die äußerlich an der seitlichen Fläche (3b) der Lauffläche (3) befestigt ist, und die auf der Seite des Zahntriebes (7) befindlich ist.
